# EUROPEAN PATENT SPECIFICATION

(11) **EP 2 835 576 B1**
(45) Date of publication and mention of the grant of the patent: **24.08.2016**
(21) Application number: 14178477.7
(22) Date of filing: 25.07.2014
(51) Int. Cl.: F21S 10/00, F21V 5/00, F21V 7/04, F21V 7/09, G03B 21/00

(54) **Lighting apparatus for projecting images**
Beleuchtungsvorrichtung zur Bildprojektion
Appareil d'éclairage pour projeter des images

(30) Priority: 26.07.2013 IT FI20130177
(43) Date of publication of application: 11.02.2015
(73) Proprietor: iGUZZINI ILLUMINAZIONE S.p.A., 62019 Recanati (IT)
(72) Inventor: Gattari, Massimo, 62018 POTENZA PICENA (IT)
(74) Representative: Cinquantini, Bruno

(56) References cited:
- EP-A1- 0 253 081
- EP-A1- 2 535 639
- WO-A1-2010/012137
- WO-A2-2012/138770
- US-A1- 2009 231 856
- US-A1- 2013 163 239

## Description

### FIELD OF THE INVENTION

The present invention field relates to the technical field of lighting apparatuses, in particular to the technical field of lighting devices adapted to project an image by means of a light beam.

### PRIOR ART

Lighting apparatuses for projecting images are known in the prior art. In general, they consist of an optical assembly, comprising at least one lighting source, adapted to emit a light beam along a main direction, means adapted to concentrate said light beam and a surface comprising the desired image to be projected, said surface being arranged transversely with respect to said main direction of emission.

These lighting apparatuses have been known for time and are used to project images on surfaces of various type, for the widest array of applications, in the fields of entertainment, advertising or other. The apparatuses may be equipped with a plurality of surfaces comprising the image to be projected, commonly named GOBOs, a term derived from the expression "*Go Between*" or *"Goes Before Optics*". Said GOBOs are often mounted on automatic actuating or rotating means adapted to vary the image projected by the lighting device in periodical manner.

In the past, the devices of this type were made with lighting sources comprising traditional, halogen or fluorescent light bulbs, and were characterized by considerable size and high running costs because the light bulbs for these applications were characterized by a relatively limited average lifespan, so that they needed to be frequently replaced.

The introduction of light sources comprising high-intensity LEDs has produced major benefits in terms of efficacy (Im/W) and duration, in terms of running costs, dimensions, flexibility and ease of use.

Patent EP1159563 describes a lighting apparatus for projecting images characterized by a lighting source comprising LEDs and an optical assembly, associated to said LEDs, and comprising a collimator element of the emitted light beam and a focusing element of the light beam arranged downstream of said collimator element. Said collimator element consists of at least one lens, associated to a single LED or a plurality of LEDs, preferably made of synthetic resin. Said focusing element consists of a plurality of lenses, associated to appropriate actuating means and adapted to the move the focus of the light emission along the emission direction.

With the recent developments of high-power LED devices and LEDs of the so-called COB (Chip On Board) type, apparatuses such as the one described in Patent EP1159563 have come progressively inadequate. Indeed, the size and powers of the new LEDs would require collimator lenses of considerable size made of materials adapted to withstand the high temperatures developed by the LED itself during operation. In brief, the collimator lenses to be used would be very costly and difficult to make, consequently making the lighting apparatus which comprises them very costly and difficult to make.

Additionally, the apparatus described in EP1159563 comprises a focusing element made so as to comprise two lenses, a first lens fixed with respect to the container of the apparatus and a second lens associated to appropriate actuating means, or made so as to comprise Fresnel lenses. Both the solutions adopted in the device according to Patent EP1159563 have the drawback of having limited light capturing and outward projecting capacity, being thus poorly efficient.

More lighting apparatuses for projecting images are disclosed in the following prior art documents: US patent application US20130163239 disclosing an illumination device comprising a collimation module, a lens assembly configured to controllably focus/defocus light, and an intermediate module arranged between the collimation module and the lens assembly; European patent EP0253081 discloses a light pattern generator comprising a heat resistant glass plate having a reflective layer deposited on one surface thereof, a non-reflective layer deposited on the surface of the reflective layer wherein both of the layers are etched to produce an opening extending through the layers wherein the opening has the shape of the desired image; international application WO/2012/138770 discloses an automated luminaire with dual over-sized graphic wheels that can be inserted and positioned into or out of the light path of the luminaire together as a unit and each graphic wheel can be rotated independent of the other wheel; US patent application US20090231856 discloses a lighting system, comprising an inner reflector and an outer reflector which is optically coupled to the distal end of the inner reflector to receive light therefrom, said inner and outer reflectors being coupled for axial movement relative to one another over a range of relative positions between a retracted position and an extended position.

The lighting apparatus according to the present invention allows to overcome the drawbacks described above and to use high-power LEDs of COB type by virtue of the use of a collimator element consisting of a reflector. Furthermore, the lighting apparatus according to the present invention introduces a focusing element capable of significantly increasing the total efficiency of the apparatus, in terms of light efficiency, by virtue of the use of telecentric lenses.

### BRIEF DESCRIPTION OF THE FIGURES

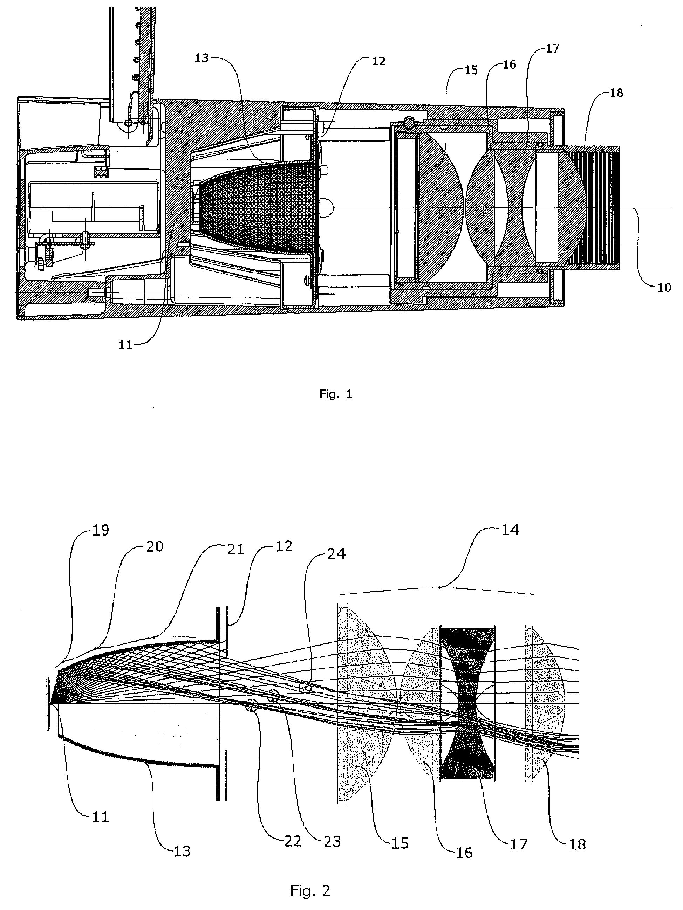

Fig. 1 shows a first section view of a lighting apparatus according to the present invention comprising the container.
Fig. 2 shows a second section view of the lighting apparatus according to the present invention comprising the path of the collimated and focused light beam.

### SUMMARY OF THE INVENTION

The lighting apparatus for projecting images by means of a light beam according to the present invention allows to obtain very high light efficiency values with respect to the similar devices of the prior art, by using high-power LEDs, in particular of the COB type, associated to a collimation element consisting of a reflector, and by using a focusing element based on telecentric lenses.

### DETAILED DESCRIPTION OF THE INVENTION

The lighting apparatus for projecting images according to the present invention comprises a container provided with an opening adapted to allow the light emission along a main, preferably longitudinal direction 10, comprising at least one punctiform light source 11, preferably comprising a LED device of the COB (Chip On Board) type; collimation means associated to said at least one punctiform light source 11 and adapted to collimate the light beam emitted by said at least one punctiform light source 11; image production means associated to the light beam emitted by said at least one punctiform light source 11; focusing means of the image projected by said means projecting images.

In greater detail, said image production means comprise at least one so-called GOBO 12, arranged transversely to said longitudinal direction 10, which usually consists of a thin metal sheet with rectified edges, which works as a mask - possibly of variable diameter, named iris, in this case - adapted to let through the light beam in selective manner, or again comprises a colored glass sheet with the desired image to be projected, or a shaping device, or a slide, i.e. a liquid crystal display or LCD. Advantageously, the lighting apparatus according to the present invention may comprise a plurality of said GOBOs 12, associated to appropriate actuating means, for example comprising a rotary or diaphragm type loader.

Said collimation means associated to said at least one punctiform light source 11 comprise a reflector 13 for light emission sources, having a rotational symmetry about said longitudinal axis 10, a reflecting inner surface, an apex comprising a first opening of size such as to accommodate said least one punctiform lighting source and a second opening, larger in size than the first opening, adapted to let out the direct light emitted by said at least one punctiform light source 11 and the light reflected by said inner surface. Preferably, said reflector 13 is characterized by an inner curvature comprising several different zones, preferably three 19-21, adapted to collimate the light beam into different focusing points 22-24 so as to optimize uniformity and lighting constancy of the plane of said GOBO 12 and allow to send a greater amount of light to said focusing means downstream of said GOBO 12.

Furthermore, the reflecting inner surface of said reflector 13 is advantageously machined, according to known techniques, so as to increase the quality of the emitted light and, in particular, so as to compensate for color variations of the LED COB lighting source as a function of distance, which could cause color variations between center and periphery of the surface.

In a preferred embodiment of the present invention, the inner surface of said reflector 13, comprising a plurality of surface segments, comprises, in turn, a plurality of arched relieves having a convexity facing towards the inside of said reflector.

Said focusing means of the projected image comprise a telecentric device 14 provided with appropriate actuating means and comprising a plurality of lenses 15-18. In particular, and with reference to the accompanying figures, said plurality of lenses comprises a first piano-convex lens 15, a second plano-convex lens 16, facing and arranged in sense opposite to said first plano-convex lens 15, a biconcave lens 17 and a third plano-convex lens 18 arranged in sense opposite to said second plano-convex lens 16.

The use of said telecentric device allows to improve the overall efficiency of the apparatus even by a factor close to 50% because it allows to collect a higher fraction of the light flux coming from the upstream collimation optical assembly than the normally used focusing optics.

Said appropriate actuating means associated to said telecentric device 14 preferably comprise a mechanism based on a coupling between a worm screw and a helical wheel, such a mechanism being often used in the prior art to translate optical devices, like the telecentric device.

## Claims

1. A lighting apparatus for projecting images by means of a light beam comprising:
a container provided with an opening adapted to allow the light emission along a main longitudinal direction (10) and adapted to accommodate at least one punctiform light source (11);
collimation means associated to said at least one punctiform light source (11) and adapted to collimate the light beam emitted by said at least one punctiform light source (11), said collimation means associated to said at least one punctiform light source (11) comprise a reflector (13) for light emission sources, having a rotational symmetry about said longitudinal axis (10), a reflecting internal surface, an apex comprising a first opening of dimensions such as to accommodate said least one punctiform lighting source and a second opening larger that the first opening, adapted to let out the direct light emitted by said at least one punctiform light source (11) and the light reflected by said inner surface;
image production means associated to the light beam emitted by said at least one punctiform light source (11); focusing means of the image projected by said image projection means, **characterized in that** the focusing means of the image projected by said image projection means comprise a telecentric device (14) provided with appropriate actuation means, said telecentric device (14) comprising a first plano-convex lens (15), a second plano-convex lens (16), facing and arranged in sense opposite to said first plano-convex lens (15), a biconcave lens (17) and a third plano-convex lens (18) arranged in sense opposite to said second plano-convex lens (16).

2. An apparatus according to claim 1, **characterized in that** said reflector (13) comprises an inner curvature comprising several different collimation zones adapted to collimate the light beam in several different focusing points so as to optimize the uniformity and the lighting constancy of said light beam on the plane on which said image production means lay and to allow to send more light to said focusing means.

3. An apparatus according to claims 1-2, **characterized in that** the inner surface of said reflector (13) comprises a plurality of surface segments.

4. An apparatus according to claim 3, **characterized in that** said surface segments comprise, in turn, a plurality of arched relieves having convexity facing towards the inside of the reflector.

5. An apparatus according to claims 1 - 4, **characterized in that** said appropriate actuation means associated to said telecentric device (14) comprise a mechanism based on a coupling between a worm screw and a helical wheel.

6. An apparatus according to claims 1 - 5, **characterized in that** said image production means comprise at least one GOBO (12), arranged transversally to said longitudinal direction (10).

7. An apparatus according to claim 6, **characterized in that** said GOBO (12) comprises at least one device chosen from the group comprising: a thin metal sheet with rectified edges; an iris, comprising a thin metal sheet and rectified edges of variable diameter; a colored glass sheet with the image to be projected impressed on it; a shaping device; a slide; a liquid crystal display or LCD.

8. An apparatus according to claims 1 - 7, **characterized in that** said at least one punctiform light source (11) comprises an LED device of the COB (Chip On Board) type.

## Patentansprüche

1. Beleuchtungsvorrichtung zur Bildprojektion mittels einem Lichtstrahl, welche aufweist:
- ein Gehäuse mit einer Öffnung, die geeignet ist, die Lichtemission entlang einer Hauptlängsrichtung (10) zu ermöglichen und geeignet ist, mindestens eine punktförmigen Lichtquelle (11) aufzunehmen;
- Kollimationsmittel, die der mindestens einen punktförmigen Lichtquelle (11) zugeordnet sind und geeignet sind, den von der mindestens einen punktförmigen Lichtquelle (11) emittierten Lichtstrahl zu kollimieren; die Kollimationsmittel, die der mindestens einen punktförmigen Lichtquelle (11) zugeordnet sind, weisen einen bezüglich der Längsachse (10) rotationssymmetrischen Reflektor (13) für Lichtemissionsquellen, eine reflektierende interne Oberfläche, einen Kegel, der eine erste Öffnung der Größe aufweist, um die mindestens eine punktförmige Lichtquelle aufzunehmen und eine zweite Öffnung auf, die größer ist als die erste Öffnung und die geeignet ist, das direkte Licht, das von der mindestens einen punktförmigen Lichtquelle (11) emittiert wird und das Licht, welches von der inneren Oberfläche reflektiert wird, heraus zu leiten;
- Bilderzeugungsmittel zugehörig zu dem von der mindestens einen punktförmigen Lichtquelle (11) emittierten Lichtstrahls; Fokussiermittel des Bildes, welches von den Bildprojektionsmitteln projiziert wird, **dadurch gekennzeichnet, dass** die Fokussiermittel des von den Bildprojektionsmitteln projizierten Bildes eine telezentrische Vorrichtung (14) aufweisen, welche mit geeigneten Antriebsmitteln versehen sind, wobei die telezentrische Vorrichtung (14) eine erste plankonvexe Linse (15), eine zweite plankonvexe Linse (16), welche gegenüberliegend der ersten plankonvexen Linse (16) angeordnet ist, eine bikonkave Linse (17) und eine dritte plankonvexe Linse (18), welche gegenüberliegend der zweiten plankonvexen Linse (16) angeordnet ist, aufweist.

2. Vorrichtung gemäß Anspruch 1, **dadurch gekennzeichnet, dass** der Reflektor (13) eine innere Krümmung aufweist, welche mehrere unterschiedliche Kollimationszonen aufweist, die geeignet sind, den Lichtstrahl in mehrere unterschiedliche Fokussierpunkte zu kollimieren, um auf der Ebene, auf welcher die Bilderzeugungsmittel liegen, die Gleichmäßigkeit und Lichtkonstanz zu optimieren und zu ermöglichen, mehr Licht zu den Fokussiermitteln zu senden.

3. Vorrichtung gemäß Anspruch 1 bis 2, **dadurch gekennzeichnet, dass** die innere Oberfläche des Reflektors (13) eine Vielzahl von Oberflächensegmenten aufweist.

4. Vorrichtung gemäß Anspruch 3, **dadurch gekennzeichnet, dass** die Oberflächensegmente wiederum eine Vielzahl von bogenförmigen Reliefs mit einer Konvexität aufweisen, die zur Innenseite des Reflektors gerichtet ist.

5. Vorrichtung gemäß Anspruch 1 bis 4, **dadurch gekennzeichnet, dass** die geeigneten Antriebsmittel, welche mit der telezentrischen Vorrichtung (14) verbunden sind, einen Mechanismus aufweisen, der auf einer Kopplung einer Schnecke mit einem Schneckenrad basiert.

6. Vorrichtung gemäß Anspruch 1 bis 5, **dadurch gekennzeichnet, dass** die Bilderzeugungsmittel mindestens ein GOBO (12) aufweisen, welche quer zur Längsrichtung (10) angeordnet sind.

7. Vorrichtung gemäß Anspruch 6, **dadurch gekennzeichnet, dass** das GOBO (12) mindestens eine Vorrichtung aus der folgenden Gruppe aufweist:
eine dünnes Metallblech mit rektifizierten Rändern; eine Blende aufweisend ein dünnes Metallblech mit rektifizierten Rändern variabler Durchmesser; eine gefärbte Glasplatte, auf welcher das zu projizierende Bild aufgedruckt ist; ein Dia; eine Flüssigkristallanzeige oder LCD-Display.

8. Vorrichtung gemäß Anspruch 1 bis 7, **dadurch gekennzeichnet, dass** die mindestens eine punktförmige Lichtquelle (11) eine LED-Vorrichtung des Typs COB (Chip On Board) aufweist.

## Revendications

1. Dispositif d'éclairage destiné à projeter des images au moyen d'un faisceau de lumière, comprenant :
un conteneur muni d'une ouverture adaptée pour permettre l'émission de lumière le long d'une direction longitudinale principale (10) et adapté pour recevoir au moins une source de lumière punctiforme (11) ;
un moyen de collimation associé à ladite au moins une source de lumière punctiforme (11) et adapté pour collimater le faisceau de lumière émis par ladite au moins une source de lumière punctiforme (11), ledit moyen de collimation associé à ladite au moins une source de lumière punctiforme (11) comprenant un réflecteur (13) pour des sources d'émission de lumière, présentant une symétrie de rotation autour dudit axe longitudinal (10), une surface intérieure réfléchissante, un sommet comportant une première ouverture de dimensions telles qu'elles permettent de recevoir ladite au moins source de lumière punctiforme et une seconde ouverture plus grande que la première ouverture, adaptée pour laisser sortir la lumière directe émise par ladite au moins une source de lumière punctiforme (11) et la lumière réfléchie par ladite surface intérieure ;
un moyen de production d'image associé au faisceau de lumière émis par ladite au moins une source de lumière punctiforme (11) ; un moyen de focalisation de l'image projetée par ledit moyen de projection d'images, **caractérisé en ce que** le moyen de focalisation de l'image projetée par ledit moyen de projection d'image comprend un dispositif télécentrique (14) muni d'un moyen d'actionnement approprié, ledit dispositif télécentrique (14) comprenant un premier lentille plano-convexe (15), une deuxième lentille plano-convexe (16), en regard et disposée dans un sens opposé à ladite première lentille plano-convexe (15), une lentille bi-concave (17) et une troisième lentille plano-convexe (18) disposée dans un sens opposé à ladite deuxième lentille plano-convexe (16).

2. Dispositif selon la revendication 1, **caractérisé en ce que** ledit réflecteur (13) présente une courbure intérieure comprenant plusieurs zones de collimation différentes adaptées pour collimater le faisceau de lumière en plusieurs points de focalisation différents de manière à optimiser l'uniformité et la constance d'éclairage dudit faisceau lumineux sur le plan sur lequel ledit moyen de production d'image se trouve, et pour permettre d'envoyer plus de lumière vers ledit moyen de focalisation.

3. Dispositif selon les revendications 1 et 2, **caractérisé en ce que** la surface intérieure dudit réflecteur (13) comprend une pluralité de segments de surface.

4. Dispositif selon la revendication 3, **caractérisé en ce que** lesdits segments de surface comprennent, à leur tour, une pluralité de reliefs en arc ayant une convexité tournée vers l'intérieur du réflecteur.

5. Dispositif selon les revendications 1 à 4, **caractérisé en ce que** ledit moyen d'actionnement approprié associé audit dispositif télécentrique (14) comprend un mécanisme basé sur un couplage entre une vis sans fin et une roue hélicoïdale.

6. Dispositif selon les revendications 1 à 5, **caractérisé en ce que** ledit moyens de production d'image comprend au moins un GOBO (12) disposé transversalement par rapport à ladite direction longitudinale (10).

7. Dispositif selon la revendication 6, **caractérisé en ce que** ledit GOBO (12) comprend au moins un dispositif choisi dans le groupe comprenant : une feuille métallique mince avec des bords redressés ; un iris, comprenant une feuille métallique mince et des bords redressés d'un diamètre variable ; une feuille de verre coloré ayant l'image à projeter imprimée sur celle-ci ; un dispositif de mise en forme ; une diapositive ; un dispositif d'affichage à cristaux liquides ou LCD.

8. Dispositif selon les revendications 1 à 7, **caractérisé en ce que** ladite au moins une source de lumière punctiforme (11) comprend un dispositif LED du type COB (puce sur carte).
